# EUROPEAN PATENT APPLICATION

(11) **EP 3 509 141 A1**
(43) Date of publication of application: **10.07.2019**
(21) Application number: 16914707.1
(22) Date of filing: 19.09.2016
(51) Int. Cl.: H01M 4/505, H01M 4/525

(54) **HIGH-QUALITY, LITHIUM-RICH AND MANGANESE-BASED POSITIVE ELECTRODE MATERIAL FOR LITHIUM ION BATTERY, AND METHOD FOR SYNTHESIZING SAME**

(30) Priority: 30.08.2016 CN 201610758473
(71) Applicant: Shandong Yuhuang New Energy Technology Co., Ltd., Heze, Shandong 274000 (CN)
(72) Inventor: DONG, Xin, Heze Shandong 274000 (CN); ZHOU, Juan, Heze Shandong 274000 (CN); YAN, Liping, Heze Shandong 274000 (CN); LIU, Aihua, Heze Shandong 274000 (CN); LI, Yan, Heze Shandong 274000 (CN); WANG, Ying, Heze Shandong 274000 (CN); ZHAO, Chenglong, Heze Shandong 274000 (CN); GAO, Hongsen, Heze Shandong 274000 (CN)
(74) Representative: Adamson Jones
(86) International application number: PCT/CN2016/099356
(87) International publication number: WO 2018/040143

(57) **Abstract**

Provided are a high-quality, lithium-rich and manganese-based positive electrode material for a lithium ion battery and a method for synthesizing same, which belong to the technical field of lithium ion batteries. The method comprises the following steps: preparing a precursor by complexing an amino acid and a nickel-cobalt-manganese metal, mixing the above-mentioned precursor with a lithium salt, and subjecting same to ball-milling, drying and calcination to obtain a finished product. The amino acid is used as a complexing agent, is environment-friendly and non-toxic, and exhibits extremely small corrosion with regard to operation equipment; the amino acid has a complexing action, slightly stronger than that of ammonia water, on nickel, cobalt and manganese, and the complexing actions on the three metals are similar, this benefiting the coprecipitation of the three transition metals, achieving the uniform distribution of each metal element in a material, improving the comprehensive electrochemical performance of a lithium-rich and manganese-based material, and improving the quality of the material. The lithium-rich and manganese-based material prepared by the method has characteristics such as a high tapped density, a high compaction density, and a better electrochemical performance.

## Description

### Technical Field

The present disclosure belongs to the technical field of lithium-ion batteries, and particularly relates to a high-quality lithium-rich and manganese-based positive electrode material for lithium-ion battery and a method for synthesizing the same.

### Background Art

A positive electrode material is a key material for composing a lithium-ion secondary battery, and its performances directly affect the quality of the lithium-ion battery.

High capacity is one of the development directions of the lithium-ion battery, however, in existing positive electrode materials, an energy density of lithium iron phosphate is 580 Wh/kg, and an energy density of lithium nickel cobalt manganese is 750 Wh/kg, both of which are relatively low. The lithium-rich and manganese-based positive electrode material, whose energy density theoretically can reach 900 Wh/kg, has become a hot spot of research and development.

The lithium-rich and manganese-based positive electrode material can be prepared using many methods, but synthesizing methods having industrial significance are merely limited to the co-precipitation methods. The co-precipitation methods can be further divided into hydroxide system, carbonate system and oxalate system according to different precipitants. If a hydroxide co-precipitation process of ternary materials is directly copied, a prepared lithium-rich and manganese-based material fails to have ideal electrochemical performances, which is mainly due to that Mn is susceptible to oxidization to cause phase separation of precursors, the sintered product is prone to form Li₂MnO₃ clusters, and hydroxide precursors are too dense. This problem can be solved by using an N₂ gas for protection and adjustment of a molar ratio of a complexing agent in the co-precipitation process, but a total production cost will be increased. The oxalate system has problems of relatively high cost and treatment of waste water. Currently, for the lithium-rich and manganese-based materials with good electrochemical performances, the precursor is generally prepared through a carbonate co-precipitation process.

At present, when the lithium-rich and manganese-based material is prepared through the carbonate co-precipitation process, aqueous ammonia is usually used as the complexing agent, while the synthesized lithium-rich and manganese-based material has problems such as a relatively low tap density and a relatively low compacted density. Moreover, as aqueous ammonia is prone to volatilize, has alkalinity and toxicity, and is irritating and corrosive to eye, nose, and skin, it can cause suffocation to people and seriously threaten physical safety of front-line operators. Furthermore, it is corrosive to a synthesizing device, and increases an operation cost of the device.

### Summary

In order to overcome shortcomings in the prior art, the present disclosure provides a high-quality lithium-rich and manganese-based positive electrode material for lithium-ion battery and a method for synthesizing the same, which can greatly improve the electrochemical performances, tap density and compacted density of lithium-rich and manganese-based materials, and also solve problems of existing methods in a synthesizing process simultaneously, such as environment pollution, corrosion to device, and hazard to physical safety of front-line operating workers.

A chemical formula of said lithium-rich and manganese-based positive electrode material for lithium-ion battery is Li_{1+z}(MnₓNi_{y}Co_{1-x-y})_{1-z}O₂, wherein a value of z is 0.01-0.30.

The present disclosure is realized through the following technical solution:

A method for synthesizing high-quality lithium-rich and manganese-based positive electrode material for lithium-ion battery, which is special in including the following steps:
preparing a precursor by making an amino acid complexed with a nickel-cobalt-manganese metal, and mixing the precursor with a lithium salt, followed by ball-milling, drying, and calcination to obtain a product.

A co-precipitation synthesizing process is developed to rapidly synthesize the precursor with a desired particle size and a high tap density, at a suitable concentration, feeding velocity, reaction temperature and pH, with a novel complexing agent-amino acid-which is safe and non-toxic, and less corrosive to devices, and has a moderate complexing capacity to metals such as nickel, cobalt and manganese.

A method for synthesizing high-quality lithium-rich and manganese-based positive electrode material of the present disclosure includes the following steps:
(1) preparing a mixed solution of a soluble carbonate compound and an amino acid at a certain concentration, preparing a mixed metal salt solution of Mn, Ni and Co at a suitable concentration according to a certain ratio of Mn:Ni:Co; preparing an amino acid solution at a certain concentration as a reaction base solution;
(2) reacting the mixed solution of the soluble carbonate compound and the amino acid to obtain a precursor, and drying the synthesized precursor for subsequent use;
(3) mixing the precursor obtained in Step (2) with a lithium salt, and then ball-milling them;
(4) calcinating the ball-milled mixed materials at a high temperature to obtain a product, wherein a calcination temperature is 750-900 °C.

In Step (1), a molar ratio of Mn:Ni:Co is x:y:(1-x-y), wherein a value of x is 0.5-0.7, a value of y is 0.1-0.3, a concentration of the soluble carbonate compound is 0.5-4 mol/L, a concentration of the mixed metal salt solution is 0.5-10 mol/L, a concentration of the amino acid is 0.0001-1 mol/L, further preferably 0.001 mol/L-0.2 mol/L, and the concentration of the amino acid base solution is 0.001 mol/L-0.2 mol/L.

The amino acid is alanine, glutamic acid, glutamine, glycine, serine, threonine, phenylalanine, tyrosine and so on, and the soluble carbonate compound is sodium carbonate, potassium carbonate, lithium carbonate, sodium bicarbonate, potassium bicarbonate and so on.

In Step (2), a pH value, a water-bath temperature and a flow velocity of the mixed metal salt solution for a reaction system are suitably set, a flow velocity of the mixed solution of the soluble carbonate compound and the amino acid is adjusted by an on-line pH automatic control system, wherein the flow velocity of the mixed metal solution is 0.1 mL/min-10 mL/min, further preferably 0.5 mL/min - 3 mL/min, the pH value is 7-9, further preferably 7.5-8.5, and a reaction temperature is 30 °C-70 °C, further preferably 40 °C-60 °C.

The synthesized precursor is vacuum-dried at 80-140 °C for 2-24 h.

In Step (3), a molar ratio of the precursor to an lithium element in the lithium salt is (1-z):(1+z), and a value of z is 0.01-0.30. The lithium salt should be additionally 1%-10% in excess.

A milling aid agent is anhydrous ethonal, acetone, ethylene glycol, carboxymethylcellulose (CMC), or polyethylene glycol, the ball-milling lasts for 1-10 h, a ratio of milling media to material is 1:1-4:1, and a revolving speed is 100-600 r/min.

In Step (4), after being ball-milled, the mixed materials are dried by a blast drier, and then placed into a corundum crucible to undergo high-temperature calcination within a muffle furnace under an air or oxygen atmosphere for 3-20 h.

Compared with the prior art, the present disclosure has the following advantages:
The amino acid, which is used as the complexing agent, is environment-friendly and non-toxic, and has extremely little corrosion to operation equipments; the amino acid has a slightly stronger complexing action on nickel, cobalt and manganese than aqueous ammonia, and has similar complexing actions on the three metals, which is favorable to the co-precipitation of the three metals, achieves uniform distribution of each metal in the material, improves overall electrochemical performances of the lithium-rich and manganese-based material, and enhances the quality of the material. The lithium-rich and manganese-based material prepared in the present disclosure has characteristics such as high tap density, high compacted density, and relatively excellent electrochemical performances.

### Brief Description of Drawings

The present disclosure is further described below in combination with figures.

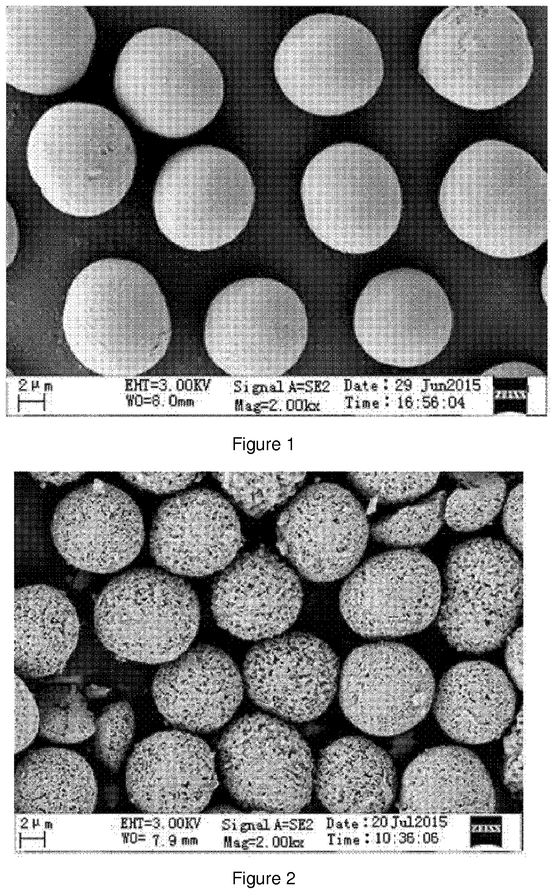

FIG. 1 is an SEM picture of a precursor of a lithium-rich and manganese-based material prepared in Example 1;
FIG. 2 is an SEM picture of the lithium-rich and manganese-based material prepared in Example 1; and

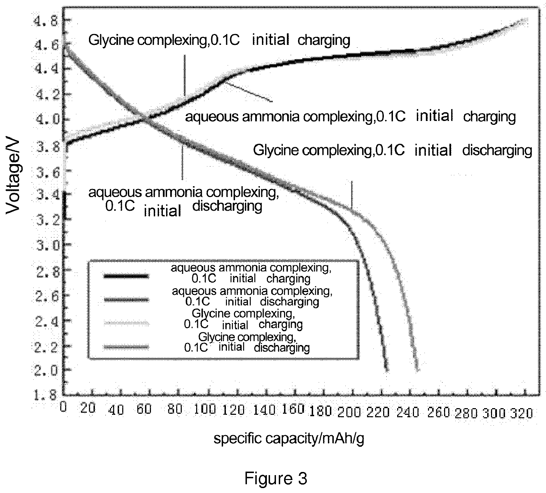

FIG. 3 is a comparative schematic diagram of 0.1C initial charging-discharging curves of Example 1 and a comparative example.

### Detailed Description of Embodiments

### Example 1

A precursor was synthesized according to a conventional process flow of carbonate co-precipitation with glycine as a complexing agent:
preparing a mixed solution of 2 mol/L Na₂CO₃ and 0.2 mol/L glycine, preparing a 2 mol/L mixed metal salt solution of Mn, Ni and Co according to a molar ratio of 0.5350:0.2325:0.2325 of Mn:Ni:Co; preparing 0.01 mol/L Mn:Ni:Co 700 mL as a reaction base solution.

In a reaction kettle, the temperature was 50 ºC, the flow velocity of the mixed metal salt solution was 3 mL/min, the flow velocity of the mixed solution of sodium carbonate and glycine was adjusted by an on-line pH automatic control system, and the pH value was controlled to be 8±0.05. The synthesis lasted for 3 h. The synthesized precursor had a mean particle size of 10.4 µm, and a tap density of 1.89 g/cm³.

The synthesized precursor was vacuum-dried at 120 °C for 10 h.

The precursor and lithium carbonate Li₂CO₃ were weighed and mixed according to a molar ratio of 1:0.650 (the ratio was 1:1.164 as measured by a lithium element, i.e. z=0.13), a suitable amount of anhydrous ethonal was added, and they were ball-milled for 6 h. A ratio of milling media to material was 2:1, and a revolving speed was 200 r/min.

The mixed materials after being ball-milled were dried by a blast drier, then placed into a corundum crucible to undergo high-temperature calcination within a muffle furnace under an air atmosphere at 850 ºC for 10 h.

The high-quality lithium-rich and manganese-based material, SP, r-GO, and PVDF were mixed at the ratio of 90:3:3:4, a suitable amount of NMP was added, they were ball-milled for 6 h, and prepared into a slurry with a certain viscosity. The prepared slurry was coated on an aluminum foil with a thickness of 20 µm, to obtain an electrode plate. After being dried at 120 °C in a vacuum oven, the electrode plate was made into an electrode plate with a diameter of 1.2 cm by a button cell puncher. A CR2016 button cell was assembled in the glove box filled up with argon with Cellgard2400 as a diaphragm, LiPF₆ as the electrolyte, EC:EMC=1:1, a 1.0 mol/L solution as the electrolyte solution, and a lithium sheet as the negative electrode. The range of the charging-discharging voltage was 2.0-4.8 V.

The lithium-rich and manganese-based material synthesized in the present example had a chemical composition of Li_{1.13}Mn_{0.46}Ni_{0.2}Co_{0.2}O₂, a tap density of 2.18 g/cm³, a compacted density of 2.89 g/cm³, a 0.1C initial charging capacity of 320 mAh/g, a discharging capacity of 245 mAh/g, and an initial coulombic efficiency of 76%.

### Example 2

A material was synthesized and tested according to the method and steps for synthesizing materials and making the button cell in Example 1 with glutamic acid as a complexing agent, 0.05 mol/L glutamic acid 500 mL as a reaction base solution, and a mixed metal salt solution flow velocity of 1.6 mL/min at a synthesizing temperature of 40 °C. A lithium-rich and manganese-based positive electrode material synthesized in the present example had a tap density of 2.01 g/cm³, a compacted density of 2.9 g/cm³, a 0.1C initial charging capacity of 320 mAh/g, a discharging capacity of 241 mAh/g, and an initial coulombic efficiency of 75%.

### Example 3

A material was synthesized and tested according to the method and steps for synthesizing materials and making the button cell in Example 1 with alanine as a complexing agent, 0.075 mol/L alanine 500 mL as a reaction base solution, and a mixed metal salt solution flow velocity of 1.6 mL/min at a synthesizing temperature of 40 °C. A lithium-rich and manganese-based positive electrode material synthesized in the present example had a tap density of 2.10 g/cm³, a compacted density of 2.99 g/cm³, a 0.1C initial charging capacity of 323 mAh/g, a discharging capacity of 247 mAh/g, and an initial coulombic efficiency of 77%.

### Example 4

A material was synthesized and tested according to the method and steps for synthesizing materials and making the button cell in Example 1 with glutamine as a complexing agent, 0.1 mol/L glutamine 500 mL as a reaction base solution, and a mixed metal salt solution flow velocity of 1.6 mL/min at a synthesizing temperature of 40 °C. A lithium-rich and manganese-based positive electrode material synthesized in the present example had a tap density of 1.97 g/cm³, a compacted density of 2.81 g/cm³, a 0.1C initial charging capacity of 319 mAh/g, a discharging capacity of 234 mAh/g, and an initial coulombic efficiency of 73%.

### Example 5

A precursor was synthesized according to a conventional process flow of carbonate co-precipitation with glutamine as a complexing agent:
preparing a mixed solution of 4 mol/L K₂CO₃ and 1 mol/L glutamine, preparing a 10 mol/L mixed metal salt solution of Mn, Ni and Co according to a ratio of 0.5350:0.2325:0.2325 of Mn:Ni:Co; preparing 0.2 mol/L glutamine 500 mL as a reaction base solution.

In a reaction system, it was set that the pH value was 9, the temperature was 70 ºC, and the flow velocity of the mixed salt solution was 3 mL/min, and a flow velocity of a mixed solution of potassium carbonate and glutamine was adjusted by an on-line pH automatic control system. The synthesis lasted for 5 h. A synthesized precursor had a mean particle size of 10.5 µm, and a tap density of 1.88 g/cm³.

The synthesized precursor was vacuum-dried at 80 °C for 24 h.

The precursor and lithium acetate were weighed and mixed according to a molar ratio of 1:1.3, a suitable amount of acetone was added, and they were ball-milled for 10 h. A ratio of milling media to material was 4:1, and a revolving speed was 100 r/min.

The mixed materials after being ball-milled were dried by a blast drier, then placed into a corundum crucible to undergo high-temperature calcination within a muffle furnace at a sintering temperature of 750 ºC for 20 h, during which an oxygen atmosphere was introduced.

The high-quality lithium-rich and manganese-based material, SP, r-GO, PVDF were mixed at the ratio of 90:3:3:4, a suitable amount of NMP was added, they were ball-milled for 6 h, and prepared into a slurry with a certain viscosity. The prepared slurry was coated on an aluminum foil with a thickness of 20 µm, to obtain an electrode plate. After being dried at 120 °C in a vacuum oven, the electrode plate was made into an electrode plate with a diameter of 1.2 cm bya button cell puncher. A CR2016 button cell was assembled in the glove box filled up with argon with Cellgard2400 as the diaphragm, LiPF₆ as the electrolyte, EC:EMC=1:1, a 1.0 mol/L solution as the electrolyte solution, and a lithium sheet as the negative electrode. Therange of the charging-discharging voltage was 2.0-4.8V.

A lithium-rich and manganese-based positive electrode material synthesized in the present example had a tap density of 2.23 g/cm³, a compacted density of 2.92 g/cm³, a 0.1C initial charging capacity of 325 mAh/g, a discharging capacity of 248 mAh/g, and an initial coulombic efficiency of 77%.

### Example 6

A precursor was synthesized according to a conventional process flow of carbonate co-precipitation with serine as a complexing agent:
preparing a mixed solution of 0.5 mol/L Li₂CO₃ and 0.0001 mol/L serine, preparing a 0.5 mol/L mixed metal salt solution of Mn, Ni and Co according to a ratio of 0.6250:0.1875:0.1875 of Mn:Ni:Co; preparing 0.001 mol/L serine 800 mL as a reaction base solution.

In a reaction system, it was set that the pH value was 7, the temperature was 30 ºC, and the flow velocity of the mixed salt solution is 10 mL/min, and the flow velocity of the mixed solution of lithium carbonate and serine was adjusted by an on-line pH automatic control system. The synthesis lasted for 4 h. The synthesized precursor had a mean particle size of 10.6 µm, and a tap density of 1.89 g/cm³.

The synthesized precursor was vacuum-dried at 140 °C for 2 h.

The precursor and lithium acetate were weighed and mixed according to a molar ratio of 1:1.5, a suitable amount of ethylene glycol was added, and they were ball-milled for 10 h. A ratio of milling media to material was 1:1, and a revolving speed was 600 r/min.

The mixed materials after being ball-milled were dried by a blast drier, then placed into a corundum crucible to undergo high-temperature calcination within a muffle furnace under an oxygen atmosphere at a sintering temperature of 900 °C for 3 h.

The high-quality lithium-rich and manganese-based material, SP, r-GO, PVDF were mixed at the ratio of 90:3:3:4, a suitable amount of NMP was added, they were ball-milled for 6 h, and prepared into a slurry with a certain viscosity. The prepared slurry was coated on an aluminum foil with a thickness of 20 µm, to obtain an electrode plate. After being dried at 120 °C in a vacuum oven, the electrode plate was made into an electrode plate with a diameter of 1.2 cm by a button cell puncher. A CR2016 button cell was assembled in the glove box filled up with argon with Cellgard2400 as the diaphragm, LiPF₆ as the electrolyte, EC:EMC=1:1, a 1.0 mol/L solution as the electrolyte solution, and a lithium sheet as the negative electrode. The range of the charging-discharging voltage was 2.0-4.8 V.

The lithium-rich and manganese-based material synthesized in the present example had a chemical composition of Li_{1.2}Mn_{0.5}Ni_{0.15}Co_{0.15}O₂, a tap density of 2.27 g/cm³, a compacted density of 2.99 g/cm³, a 0.1C initial charging capacity of 331 mAh/g, a discharging capacity of 251 mAh/g, and an initial coulombic efficiency of 80%.

### Example 7

A precursor was synthesized according to a conventional process flow of carbonate co-precipitation with threonine as a complexing agent:
preparing a mixed solution of 3 mol/L NaHCO₃ and 0.5 mol/L threonine, preparing a 5 mol/L mixed metal salt solution of Mn, Ni and Co according to a ratio of 0.70:0.15:0.15 of Mn:Ni:Co; preparing 0.1 mol/L threonine 600 mL as a reaction base solution.

In a reaction system, it was set that the pH value was 7.5, the temperature was 60ºC, and the flow velocity of the mixed salt solution was 5 mL/min, and the flow velocity of the mixed solution of sodium bicarbonate and threonine was adjusted by an on-line pH automatic control system. The synthesis lasted for 3 h. The synthesized precursor had a mean particle size of 10.4 µm, and a tap density of 1.87 g/cm³.

The synthesized precursor was vacuum-dried at 110 °C for 10h.

The precursor and lithium hydroxide were weighed and mixed according to a molar ratio of 1:1.22, a suitable amount of CMC (carboxymethylcellulose) was added, and they were ball-milled for 5 h. A ratio of milling media to material was 3:1, and a revolving speed was 300 r/min.

The mixed materials after being ball-milled were dried by a blast drier, then placed into a corundum crucible to undergo high-temperature calcination within a muffle furnace under an oxygen atmosphere at 850 ºC for 10 h.

The high-quality lithium-rich and manganese-based material, SP, r-GO, PVDF were mixed at the ratio of 90:3:3:4, a suitable amount of NMP was added, they were ball-milled for 6 h, and prepared into a slurry with a certain viscosity. The prepared slurry was coated on an aluminum foil with a thickness of 20 µm, to obtain an electrode plate. After being dried at 120 °C in a vacuum oven, the electrode plate was made into an electrode plate with a diameter of 1.2 cm by a button cell puncher. A CR2016 button cell was assembled in the glove box filled up with argon with Cellgard2400 as the diaphragm, LiPF₆ as the electrolyte, EC:EMC=1:1, a 1.0 mol/L solution as the electrolyte solution, and a lithium sheet as the negative electrode. The range of the charging-discharging voltage was 2.0-4.8 V.

The lithium-rich and manganese-based material synthesized in the present example had a chemical composition of Li_{1.10}Mn_{0.63}Ni_{0.135}Co_{0.135}O₂, a tap density of 2.25 g/cm³, a compacted density of 2.95 g/cm³, a 0.1C initial charging capacity of 329 mAh/g, a discharging capacity of 250 mAh/g, and an initial coulombic efficiency of 79%.

### Example 8

A precursor was synthesized according to a conventional process flow of carbonate co-precipitation with phenylalanine as a complexing agent:
preparing a mixed solution of 1 mol/L KHCO₃ and 0.1 mol/L phenylalanine, preparing a 3 mol/L mixed metal salt solution of Mn, Ni and Co according to a ratio of 0.6:0.3:0.1 of Mn:Ni:Co; preparing 0.15 mol/L phenylalanine 700 mL as a reaction base solution.

In a reaction system, it was set that the pH value was 8.5, the temperature as 60 ºC, and the flow velocity of the mixed salt solution was 0.5 mL/min, and the flow velocity of the mixed solution of potassium bicarbonate and phenylalanine was adjusted by an on-line pH automatic control system. The synthesis lasted for 6 h. The synthesized precursor had a mean particle size of 10.6 µm, and a tap density of 1.91 g/cm³.

The synthesized precursor was vacuum-dried at 110 °C for 9 h.

The precursor and lithium nitrate were weighed and mixed according to a molar ratio of 1:1.67, a suitable amount of polyethylene glycol was added, and they were ball-milled for 7 h. A ratio of milling media to material was 3:1, and a revolving speed was 500 r/min.

The mixed materials after being ball-milled were dried by a blast drier, then placed into a corundum crucible to undergo high-temperature calcination within a muffle furnace under an oxygen atmosphere at 800 ºC for 9 h.

The high-quality lithium-rich and manganese-based material, SP, r-GO, PVDF were mixed at the ratio of 90:3:3:4, a suitable amount of NMP was added, they were ball-milled for 6 h, and prepared into a slurry with a certain viscosity. The prepared slurry was coated on an aluminum foil with a thickness of 20 µm, to obtain an electrode plate. After being dried at 120 °C in a vacuum oven, the electrode plate was made into an electrode plate with a diameter of 1.2 cm by a button cell puncher. A CR2016 button cell was assembled in the glove box filled up with argon with Cellgard2400 as the diaphragm, LiPF₆ as the electrolyte, EC:EMC=1:1, a 1.0 mol/L solution as the electrolyte solution, and a lithium sheet as the negative electrode. A range of a charging-discharging voltage was 2.0-4.8 V.

The lithium-rich and manganese-based material synthesized in the present example had a chemical composition of Li_{1.25}Mn_{0.45}Ni_{0.225}Co_{0.075}O₂, a tap density of 2.26 g/cm³, a compacted density of 2.95 g/cm³, a 0.1C initial charging capacity of 329 mAh/g, a discharging capacity of 253 mAh/g, and an initial coulombic efficiency of 80%.

### Example 9

A precursor was synthesized according to a conventional process flow of carbonate co-precipitation with tyrosine as a complexing agent:
preparing a mixed solution of 1.5 mol/L KHCO₃ and 0.001 mol/L tyrosine, preparing a 1 mol/L mixed metal salt solution of Mn, Ni and Co according to a ratio of 0.5350:0.2325:0.2325 of Mn:Ni:Co; preparing 0.1 mol/L tyrosine 700 mL as a reaction base solution.

In a reaction system, it was set that the pH value was 8, the temperature was 50 ºC, and the flow velocity of the mixed salt solution was 2 mL/min, and the flow velocity of the mixed solution of potassium bicarbonate and tyrosine was adjusted by an on-line pH automatic control system. The synthesis lasted for 6 h. The synthesized precursor had a mean particle size of 10.8 µm, and a tap density of 1.94 g/cm³.

The synthesized precursor was vacuum-dried at 130 °C for 9 h.

The precursor and lithium nitrate were weighed and mixed according to a molar ratio of 1:1.3, a suitable amount of polyethylene glycol was added, and they were ball-milled for 3 h. A ratio of milling media to material was 2:1, and a revolving speed was 500 r/min.

The mixed materials after being ball-milled were dried by a blast drier, then placed into a corundum crucible to undergo high-temperature calcination under an oxygen atmosphere within a muffle furnace at 900 ºC for 9 h.

The high-quality lithium-rich and manganese-based material, SP, r-GO, PVDF were mixed at the ratio of 90:3:3:4, a suitable amount of NMP was added, they were ball-milled for 6 h, and prepared into a slurry with a certain viscosity. The prepared slurry was coated on an aluminum foil with a thickness of 20 µm, to obtain an electrode plate. After being dried at 120 °C in a vacuum oven, the electrode plate was made into an electrode plate with a diameter of 1.2 cm by a button cell puncher. A CR2016 button cell was assembled in the glove box filled up with argon with Cellgard2400 as the diaphragm, LiPF₆ as the electrolyte, EC:EMC=1:1, a 1.0 mol/L solution as the electrolyte solution, and a lithium sheet as the negative electrode. The range of the charging-discharging voltage was 2.0-4.8 V.

The lithium-rich and manganese-based material synthesized in the present example had a chemical composition of Li_{1.13}Mn_{0.46}Ni_{0.2}Co_{0.2}O₂, a tap density of 2.31 g/cm³, a compacted density of 3.01 g/cm³, a 0.1C initial charging capacity of 334 mAh/g, a discharging capacity of 260 mAh/g, and an initial coulombic efficiency of 83%.

### Comparative Example

As a control to Example 1, aqueous ammonia was used as a complexing agent. The whole experiment was operated in the same way as Example 1. A synthesized precursor had a mean particle size of 10.1 µm, and a tap density of 1.64 g/cm³. A synthesized lithium-rich and manganese-based material Li_{1.13}Mn_{0.46}Ni_{0.2}Co_{0.2}O₂ had a tap density of 1.79 g/cm³, a compacted density of 2.4 g/cm³, a 0.1C initial charging capacity of 321 mAh/g, a discharging capacity of 224 mAh/g, and an initial coulombic efficiency of 69%.

**Table 1 Comparison of Main Performance Indices between Examples and Comparative Example**

| No. | discharging capacity (mAh/g) | initial coulombic efficiency (100%) | tap density (g/cm³) | compact density (g/cm³) |
|---|---|---|---|---|
| Example 1 | 245 | 76 | 2.18 | 2.89 |
| Example 2 | 241 | 75 | 2.01 | 2.90 |
| Example 3 | 247 | 77 | 2.10 | 2.99 |
| Example 4 | 234 | 73 | 1.97 | 2.81 |
| Example 5 | 248 | 77 | 2.23 | 2.92 |
| Example 6 | 251 | 80 | 2.27 | 2.99 |
| Example 7 | 250 | 79 | 2.25 | 2.95 |
| Example 8 | 253 | 80 | 2.26 | 2.95 |
| Example 9 | 260 | 83 | 2.31 | 3,01 |
| Comparative Example | 224 | 69 | 1.79 | 2.40 |

## Claims

1. A method for synthesizing high-quality lithium-rich and manganese-based positive electrode material for a lithium-ion battery, comprising following steps:
preparing a precursor by making an amino acid complexed with a nickel-cobalt-manganese metal, and mixing the precursor with a lithium salt, followed by ball-milling, drying, and calcination to obtain a product.

2. The method for synthesizing high-quality lithium-rich and manganese-based positive electrode material for a lithium-ion battery of claim 1, comprising following steps:
(1) preparing a mixed solution of a soluble carbonate compound and an amino acid at a certain concentration, preparing a mixed metal salt solution of Mn, Ni and Co at a suitable concentration according to a certain ratio of Mn:Ni:Co; preparing an amino acid solution at a certain concentration as a reaction base solution;
(2) reacting the mixed solution of the soluble carbonate compound and the amino acid to obtain a precursor, and drying the synthesized precursor for subsequent use;
(3) mixing the precursor obtained in Step (2) with a lithium salt, and then ball-milling; and
(4) calcinating the ball-milled mixed materials at a high temperature to obtain a product, wherein a calcination temperature is 750-900 °C.

3. The method for synthesizing high-quality lithium-rich and manganese-based positive electrode material for a lithium-ion battery of claim 2, wherein in Step (1), a molar ratio of Mn:Ni:Co is x:y:(1-x-y), wherein a value of x is 0.5-0.7, a value of y is 0.1-0.3, a concentration of the soluble carbonate compound is 0.5-4 mol/L, a concentration of the mixed metal salt solution is 0.5-10 mol/L, the concentration of the amino acid is 0.0001-1 mol/L, and a concentration of the amino acid base solution is 0.001 mol/L-0.2 mol/L.

4. The method for synthesizing high-quality lithium-rich and manganese-based positive electrode material for a lithium-ion battery of claim 2, wherein in Step (2) a pH value, a water-bath temperature and a flow velocity of the mixed metal salt solution for a reaction system are suitably set, a flow velocity of the mixed solution of the soluble carbonate compound and the amino acid is adjusted by an on-line pH automatic control system, wherein the flow velocity of the mixed metal salt solution is 0.1 mL/min-10 mL/min, the pH value is 7-9, and a reaction temperature is 30 °C-70 °C.

5. The method for synthesizing high-quality lithium-rich and manganese-based positive electrode material for a lithium-ion battery of claim 2, wherein in Step (3), based on a chemical formula of the high-quality lithium-rich and manganese-based positive electrode material for a lithium-ion battery, a molar ratio of the precursor to lithium salt is 1 :z, and lithium is 1-10% in excess.

6. The method for synthesizing high-quality lithium-rich and manganese-based positive electrode material for a lithium-ion battery of any one of claims 4-5, wherein in Step (1), the amino acid is alanine, glutamic acid, glutamine, glycine, serine, threonine, phenylalanine, tyrosin; the soluble carbonate compound is sodium carbonate, potassium carbonate, lithium carbonate, sodium bicarbonate, potassium bicarbonate.

7. The method for synthesizing high-quality lithium-rich and manganese-based positive electrode material for a lithium-ion battery of claim 6, wherein in step (2), the synthesized precursor is vacuum-dried at 80-140 °C for 2-24 h.

8. The method for synthesizing high-quality lithium-rich and manganese-based positive electrode material for a lithium-ion battery of claim 7, wherein in Step (3), a milling aid agent is anhydrous ethonal, acetone, ethylene glycol, carboxymethylcellulose (CMC), or polyethylene glycol, the ball-milling lasts for 1-10 h, a ratio of milling media to material is 1:1-4:1, and a revolving speed is 100-600 r/min.

9. The method for synthesizing high-quality lithium-rich and manganese-based positive electrode material for a lithium-ion battery of claim 8, wherein in Step (4), after being ball-milled, mixed materials are dried by a blast drier, and then placed into a corundum crucible to undergo high-temperature calcination within a muffle furnace under an air or oxygen atmosphere for 3-20 h.

10. A high-quality lithium-rich and manganese-based positive electrode material for lithium-ion battery of claim 1, wherein a chemical formula of the lithium-rich and manganese-based positive electrode material is Li_{1+z}(MnₓNi_{y}Co_{1-x-y})_{1-z}O₂, where a value of x is 0.5-0.7, a value of y is 0.1-0.3, and a value of z is 0.01-0.30.
